# EUROPEAN PATENT SPECIFICATION

(11) **EP 0 975 899 B1**
(45) Date of publication and mention of the grant of the patent: **19.12.2001**
(21) Application number: 98917375.2
(22) Date of filing: 15.04.1998
(51) Int. Cl.: F16G 13/06, F16G 13/18

(54) **A CHAIN**
KETTE
CHAINE

(30) Priority: 15.04.1997 GB 9707553
(43) Date of publication of application: 02.02.2000
(73) Proprietor: RENOLD Plc, Wythenshawe Manchester M22 5WL (GB)
(72) Inventor: CHRISTMAS, Michael, Charles, Cheshire SK8 6DE (GB)
(74) Representative: Every, David Aidan
(86) International application number: GB9801103
(87) International publication number: WO9846905

(56) References cited:
- DE-C- 60 176
- US-A- 3 312 117

## Description

The present invention relates to a chain of the kind used in drive or transmission mechanisms or in lifting apparatus.

Conventional roller and bush chains comprise a plurality of inner link assemblies that are interconnected by pairs of opposed outer link plates. Each inner link assembly comprises a pair of opposed inner link plates, each inner link plate having two apertures aligned with corresponding apertures in the opposed inner link plate. The inner and outer link plates are interconnected by pins that pass through aligned apertures in the plates. The pin is received in a bush that extends between opposed inner link plates, and is fixed in the aperture of the inner link plate.

Such a chain can be relatively expensive to manufacture and assemble in view of the number of components. An example of a chain according to the preamble of claim 1 is disclosed in DE-C-60176.

It is an object of the present invention to obviate or mitigate the aforesaid disadvantages by providing for a chain that is simpler and cheaper to manufacture and assemble.

According to the present invention there is provided a chain comprising a plurality of first links each having at least two apertures, adjacent first links being interconnected by a second link which comprises a rigid closed loop that passes through at least one of said apertures, the loop being separable into first and second portions by relative movement of the portions in a direction transverse to the length of the chain, characterized in that said first portion has ends that releasably engage with ends of said second portion in a snap-fit connection.

The ends of the second link may each have ramped surfaces, the ramped surfaces of the first portion being complementary to those of the second portion.

The second link may assembled by moving the first and second portions together in a direction transverse to the longitudinal direction of the chain so that the ramped surfaces engage.

In one preferred embodiment there is provided a clearance between the second link and the inner link assembly to permit movement of the ends in a direction parallel to the longitudinal axis of the chain during engagement of the ramped surfaces. The ramped surfaces may each comprise two surfaces inclined in opposite directions.

Alternatively, the ends of the first and second portions may be constrained against movement relative to the inner link assembly in a direction parallel to the longitudinal axis of the chain. In this case each ramped surface is divided into separate parts about a longitudinal axis of the second link so that during assembly of the link portions the ends are forced to move rotationally about the longitudinal axis relative to the inner link assembly. Preferably a first part of the ramped surface is concave and a second part is convex, the ramped surfaces of each second link portion being complementary such that during engagement the ends are caused to rotate about the longitudinal axis of the link.

In a further alternative preferred embodiment said ends of the first portion of the second link engage with ends of the second portion in an interference fit connection.

The connection may comprise a spigot and socket, a tongue and yoke connection, or a ball and socket joint.

Specific embodiments of the present invention will now be described, by way of example only, with reference to the accompanying drawings in which:
Figure 1 is a plan view of a chain in accordance with the present invention;
Figure 2 is a plan view of a link of the chain of figure 1;
Figure 3 is a scrap enlarged part sectioned view of part of the link of figure 2;
Figure 4 is a fragmented perspective view of a first alternative embodiment of the link shown separated;
Figure 5 is a scrap view of the link of figure 4 shown connected;
Figure 6 is a plan view of a second alternative embodiment of the link; and
Figure 7 is a plan view of a third alternative embodiment of the link.

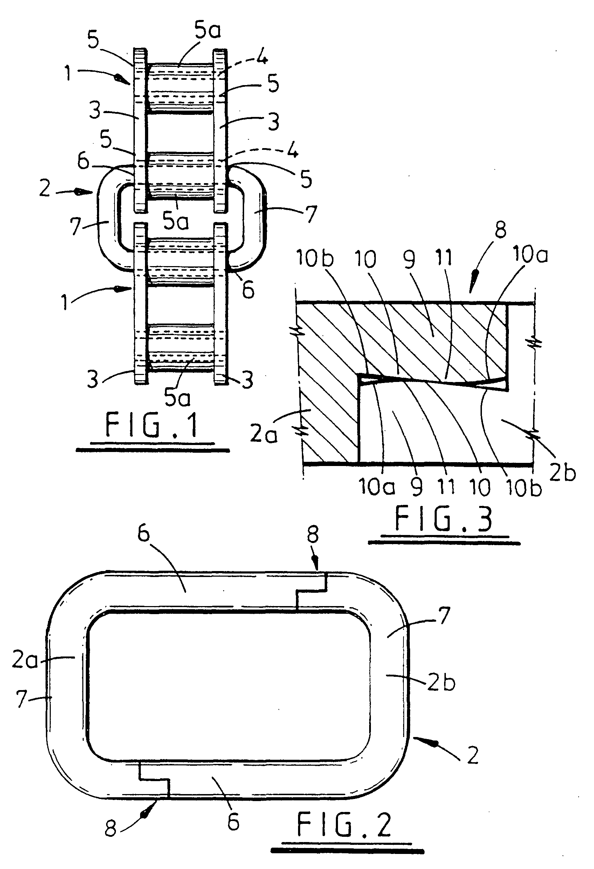

Referring now to the drawings, figures 1 to 3 show part of a length of chain comprising two inner link assemblies 1 interconnected by a single closed loop link 2.

The inner link assemblies 1 are constructed in the same way as those of a conventional roller bush chain. In particular, they comprise opposed inner link plates 3 bridged by a pair of bushes 4 (shown in dotted line) that are received in apertures 5 in each link plate 3. Each bush 4 supports a rotary roller 5a between the opposed inner link plates 3.

In the embodiment of figures 1 to 3 the loop link 2 is constructed from an elongate metallic member of circular cross-section. The member is bent into an approximate rectangular loop configuration comprising two transverse parallel limbs 6 that each pass through a corresponding bush 4 ( with a small clearance) in adjacent inner link assemblies 1 and which are joined at each end by integral shorter limbs 7. The transverse parallel limbs 6 serve to replace the pins of a conventional bush roller chain.

As can be seen from figures 2 and 3, each loop link 2 is separable into two portions 2a, 2b, the portions being joined by means of two snap-fit connections as indicated by reference numeral 8. Each snap-fit connection 8 comprises a pair of mating ramped tongues 9, one projecting from each end of the loop portions 2a, 2b. Complementary ramped surfaces 10 of the tongues 9 are defined in a plane that is approximately perpendicular to the longitudinal axis of the chain and each comprises a short incline 10a that meets with a longer reverse incline 10b at an apex 11.

The chain is assembled by threading the transverse parallel limbs 6 of the link portions 2a, 2b through the corresponding bushes 4 of adjacent inner link assemblies 1, presenting the mating ramped tongues 9 to one another and pressing the portions 2a, 2b together in a direction transverse to the longitudinal axis of the chain until they engage in a snap-fit relationship. During assembly the short inclines 10a of the ramped surfaces 10 ride over each other until the apices 11 come into contact. Further movement in the same direction causes each longer reverse incline 10b to pass over the apex 11 of the other ramped surface 10 and engage with the opposed incline 10b in a snap-fit. The small clearance between each transverse parallel limb 6 and corresponding bush 4 allows limited relative movement of the limbs 6 in the direction of the longitudinal axis of the chain as the ramped surfaces 10 engage.

In order to separate the two portions 2a, 2b of the loop link 2 significant force transverse to the chain is applied to the link portions 2a, 2b to release the snap-fit connections 8.

Each snap-fit connection is shown at one end of the transverse limb 6 adjacent a shorter limb 7. In fact the connections 8 could be provided at any position along the transverse limbs 6 but the particular arrangement shown is preferable since it provides for an uninterrupted bearing surface between each bush 4 and transverse limb 6.

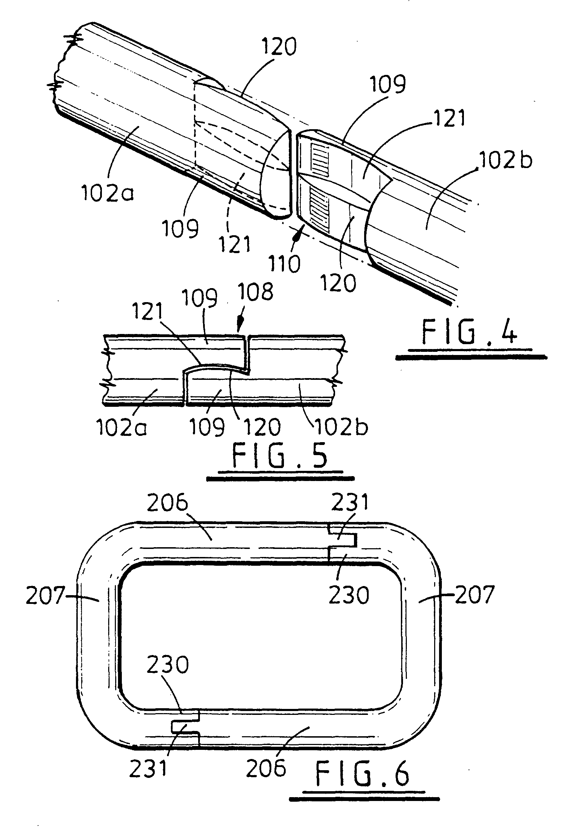

An alternative snap-fit connection 108 is shown in figures 4 and 5 in which parts corresponding to those of figures 1 to 3 are indicated by the same reference numerals increased by 100 and are not further described except insofar as they differ from their counterparts in figures 1 to 3.

Each tongue 109 has a mating surface 110 comprising a convex surface 120 and a vertically adjacent concave surface 121, the mating surface 110 being designed to mate with a complementary surface 110 of the other tongue 109 of the snap-fit connection 108. The division between the convex and concave surfaces 120, 121 coincides with the longitudinal axis of the elongate member that forms the loop link 102. When the two link portions 102a, 102b are fully engaged (see figure 5) the convex surface 120 of one tongue 109 is received by the concave surface 121 of the other tongue 109 and vice versa.

When the tongues 109 are presented to each other for assembly of the loop link 102 and interconnection of the inner link assemblies, the transverse parallel limbs 106 are constrained against significant relative movement in the direction of the longitudinal axis of the chain by the bushes in which they are received. Accordingly the mating of the convex and concave surfaces 120,121 initially effects a rotational movement in the ends of the limbs 106 about the longitudinal axis of the elongate member. Further movement of the link portions 102a, 102b together ensures that the convex and concave portions are fully engaged and the ends twist back in a snap action. The snap-fit connections 108 are arranged such that the two ends of a given link portion 102a or 102b twist in opposite directions during assembly.

A third embodiment of the loop link of the present invention shown in figure 6 has one end of each of the transverse limbs 206 in the form of a yoke 230 designed to receive a tongue 231 defined on the other end of the other limb 206. The tongue 231 is received by the yoke 230 in an interference fit. In a variation (not shown) of this embodiment the limbs are connected by a spigot and socket connection with an interference fit.

Figure 7 shows a further alternative embodiment of the loop link which is split along the length of each transverse limb 306 into two portions 302a and 302b to provide elongate mating faces 340 extending along the length of the transverse limbs 306. Each end of the mating faces of one portion 302b has a nipple protrusion 341 that engages in a corresponding socket 342 formed in a mating face of the other portion 302a.

It will be appreciated that numerous modifications to the above described design may be made without departing from the scope of the invention as defined in the appended claims. For example, any convenient form of snap-fit or interference fit connection may be used as an alternative to the exemplary embodiments described above. Such a connection may comprise one end of a limb having housed rotary ball bearings that are engageable in complementary sockets or recesses.

## Claims

1. A chain comprising a plurality of first links (1) each having at least two apertures (4), adjacent first links being interconnected by a second link (2) which comprises a rigid closed loop (7) that passes through at least one of said apertures (4), the loop being separable into first and second portions (2a, 2b) by relative movement of the portions in a direction transverse to the length of the chain **characterized in that**, said first portion (2a) has ends that releasably engage with ends of said second portion (2b) in a snap-fit connection.

2. A chain according to claim 1, wherein said ends of the second link each have ramped surfaces, the ramped surfaces of the first portion being complementary to those of the second portion.

3. A chain according to claim 2, wherein the second link is assembled by moving the first and second portions together in a direction transverse to the longitudinal direction of the chain so that the ramped surfaces engage,

4. A chain according to claim 3, wherein there is a clearance between the second link and the first links to permit movement of the ends in a direction parallel to the longitudinal axis of the chain during engagement of the ramped surfaces.

5. A chain according to claim 2, 3 or 4, wherein the ramped surfaces each comprise two surfaces inclined in complementary directions.

6. A chain according to claim 3, wherein the ends of the first and second portions are constrained against movement relative to the first links in a direction parallel to the longitudinal axis of the chain.

7. A chain according to claim 6, wherein each ramped surface is divided into separate parts about a longitudinal axis of the second link.

8. A chain according to claim 7, wherein a first part of the ramped surface is concave and a second part is convex such that during engagement of the ramped surfaces of the first and second portions the ends are caused to rotate about the longitudinal axis of the link.

9. A chain according to claim 1, wherein the ends engage by means of a protrusion that engages in a corresponding socket.

10. A chain according to claim 1, wherein said ends of the first portion of the second link engage with ends of the second portion in an interference in connection.

11. A chain according to claim 10, wherein the connection is a spigot and socket.

12. A chain according to claim 10, wherein the connection is a tongue and yoke connection.

13. A chain according to claim 10, wherein the connection comprises a ball and socket joint.

## Patentansprüche

1. Kette, die eine Vielzahl von ersten Kettengliedern (1) aufweist, von denen ein jedes mindestens zwei Öffnungen (4) auweist, wobei benachbarte erste Kettenglieder durch ein zweites Kettenglied (2) verbunden sind, das ein starres, geschlossenes Schleifenkettenglied (7) aufweist, das durch mindestens eine der Öffnungen (4) hindurchgeht, wobei das Schleifenkettenglied in einen ersten und zweiten Abschnitt (2a, 2b) durch eine relative Bewegung der Abschnitte in einer Richtung quer zur Länge der Kette trennbar ist, **dadurch gekennzeichnet, daß** der erste Abschnitt (2a) Enden aufweist, die lösbar mit Enden des zweiten Abschnittes (2b) in einer Schnappverschlußverbindung in Eingriff kommen.

2. Kette nach Anspruch 1, bei der Enden des zweiten Kettengliedes jeweils abgeschrägte Flächen aufweisen, wobei die abgeschrägten Flächen des ersten Abschnittes zu denen des zweiten Abschnittes komplementär sind.

3. Kette nach Anspruch 2, bei der das zweite Kettenglied durch Bewegen des ersten und zweiten Abschnittes gemeinsam in einer Richtung quer zur Längsrichtung der Kette, so daß die abgeschrägten Flächen in Eingriff kommen, zusammengebaut werden.

4. Kette nach Anspruch 3, bei der ein Zwischenraum zwischen dem zweiten Kettenglied und den ersten Kettengliedern vorhanden ist, um eine Bewegung der Enden in einer Richtung parallel zur Längsachse der Kette während des Eingriffes der abgeschrägten Flächen zu gestatten.

5. Kette nach Anspruch 2, 3 oder 4, bei der die abgeschrägten Flächen jeweils zwei Flächen aufweisen, die in komplementären Richtungen geneigt sind.

6. Kette nach Anspruch 3, bei der die Enden der ersten und zweiten Abschnitte gegen eine Bewegung relativ zu den ersten Kettengliedern in einer Richtung parallel zur Längsachse der Kette eingeschränkt sind.

7. Kette nach Anspruch 6, bei der jede abgeschrägte Fläche in separate Abschnitte um eine Längsachse des zweiten Kettengliedes herum unterteilt ist.

8. Kette nach Anspruch 7, bei der ein erster Abschnitt der abgeschrägten Fläche konkav und ein zweiter Abschnitt konvex ist, so daß während des Eingriffes der abgeschrägten Flächen des ersten und zweiten Abschnittes bewirkt wird, daß sich die Enden um die Längsachse des Kettengliedes herum drehen.

9. Kette nach Anspruch 1, bei der die Enden mittels eines Vorsprunges in Eingriff kommen, der in einer entsprechenden Innenaussparung in Eingriff kommt.

10. Kette nach Anspruch 1, bei der die Enden des ersten Abschnittes des zweiten Kettengliedes mit den Enden des zweiten Abschnittes in einer Preßpassungsverbindung in Eingriff kommen.

11. Kette nach Anspruch 10, bei der die Verbindung eine Muffenverbindung ist.

12. Kette nach Anspruch 10, bei der die Verbindung eine Feder-Gabel-Verbindung ist.

13. Kette nach Anspruch 10, bei der die Verbindung ein Kugelgelenk aufweist.

## Revendications

1. Chaîne comprenant plusieurs premiers maillons (1) comportant chacun au moins deux ouvertures (4), les premiers maillons adjacents étant interconnectés par un deuxième maillon (2) comprenant une boucle rigide fermée (7) traversant au moins une desdites ouvertures (4), la boucle pouvant être séparée en des première et deuxième parties (2a, 2b) par le déplacement relatif des parties dans une direction transversale à la longueur de la chaîne, **caractérisée en ce que** ladite première partie (2a) comporte des extrémités s'engageant de façon amovible dans les extrémités de ladite deuxième partie (2b) par encliquetage.

2. Chaîne selon la revendication 1, dans laquelle lesdites extrémités du deuxième maillon comportent chacune des surfaces en rampe, les surfaces en rampe de la première partie étant complémentaires de celles de la deuxième partie.

3. Chaîne selon la revendication 2, dans laquelle le deuxième maillon et assemblé par déplacement commun des première et deuxième parties dans une direction transversale à la direction longitudinale de la chaîne, de sorte à entraîner l'engagement des surfaces en rampe.

4. Chaîne selon la revendication 3, dans laquelle un dégagement est établi entre le deuxième maillon et les premiers maillons pour permettre le déplacement des extrémités dans une direction parallèle à l'axe longitudinal de la chaîne au cours de l'engagement des surfaces en rampe.

5. Chaîne selon les revendications 2, 3 ou 4, dans laquelle les surfaces en rampe comprennent chacune deux surfaces inclinées dans des directions complémentaires.

6. Chaîne selon la revendication 3, dans laquelle les extrémités des première et deuxième parties sont limitées contre un déplacement relatif par rapport aux premiers maillons dans une direction parallèle à l'axe longitudinal de la chaîne.

7. Chaîne selon la revendication 6, dans laquelle chaque surface en rampe est divisée en des parties séparées autour d'un axe longitudinal du deuxième maillon.

8. Chaîne selon la revendication 7, dans laquelle une première partie de la surface en rampe est concave, une deuxième partie étant convexe, de sorte qu'au cours de l'engagement des surfaces en rampe des première et deuxième parties, les extrémités sont entraînées à tourner autour de l'axe longitudinal du maillon.

9. Chaîne selon la revendication 1, dans laquelle les extrémités s'engagent par l'intermédiaire d'une saillie s'engageant dans une cavité correspondante.

10. Chaîne selon la revendication 1, dans laquelle lesdites extrémités de la première partie du deuxième maillon s'engageant dans les extrémités de la deuxième partie par ajustement serré.

11. Chaîne selon la revendication 10, dans laquelle la connexion est une connexion à emboîtement.

12. Chaîne selon la revendication 10, dans laquelle la connexion est une connexion à languette et à joug.

13. Chaîne selon la revendication 10, dans laquelle la connexion est un joint à rotule.
